# EUROPEAN PATENT SPECIFICATION

(11) **EP 0 700 821 B1**
(45) Date of publication and mention of the grant of the patent: **07.01.1998**
(21) Application number: 95202315.8
(22) Date of filing: 28.08.1995
(51) Int. Cl.: B62D 7/06, B62D 9/00

(54) **Selective compound steering mechanism**
Kombinierte Lenkung mit wählbarer Lenkübersetzung
Mécanisme de direction combiné à sélection du rapport de braquage

(30) Priority: 09.09.1994 US 302450
(43) Date of publication of application: 13.03.1996
(73) Proprietor: NEW HOLLAND U.K. LIMITED, Basildon, Essex SS14 3AD (GB)
(72) Inventor: Hurlburt, Joseph C., Lancaster, PA 17603 (US)
(74) Representative: Vandenbroucke, Alberic

(56) References cited:
- DE-U- 1 991 877
- US-A- 3 064 993
- US-A- 5 297 648
- US-A- 5 312 123

## Description

The present invention relates generally to a steering mechanism for an agricultural tractor in which the front axle is laterally shiftable in response to a steering movement of the steerable wheels and, more particularly, to a linkage mechanism pivotally connecting a laterally shiftable steering axle to a vehicle chassis.

Tractors, whether used in an agricultural setting or in an industrial setting, typically include a fixed axle through which primary driving power is transferred through fixed wheels rotatably mounted on opposing ends of the fixed axle, and a steering axle having pivotally mounted steerable ground engaging wheels rotatably mounted on the opposing ends thereof to support the chassis of the tractor above the ground. Supplemental driving power is often provided through the steerable ground engaging wheels, while a steering mechanism remotely controllable by the operator from the operator's compartment selectively controls the pivotal movement of the steerable wheels relative to the steering axle.

Compound steering mechanisms, i.e. vehicle steering mechanisms in which the wheels pivotally move relative to the axle on which they are mounted and the axle, in turn, pivots relative to the chassis to which it is mounted, have been proven to reduce the turning radius of a vehicle without requiring major modification to the structure of the vehicle. Such a compound steering mechanism can be found in US-A-5.312.124.

While such compound steering mechanisms have been shown to be convertible between standard steering mode and compound steering mode, as described in US-A-5.297.648, and in US-A-5.312.123, all known compound steering mechanisms utilize only one mode of compound steering behaviour, wherein the maximum amount of steering is established at a given amount of angular rotation of the axle relative to the chassis and at a given amount of angular rotation of the wheel relative to the axle. This preset compound steering behaviour is not able to change the maximum steering characteristics as a function of the tread setting, as the lateral spacing between the front wheels can be varied selectively to correspond to the row spacing of the crop to be worked by the tractor.

The SuperSteer™ front axle/steering mechanism marketed by New Holland North America, Inc. as a part of its GENESIS™ tractor series has been shown to be capable of doing a turn at the end of a field of crop planted in rows spaced 0,76 metres (30 inches) apart in the span of 12 rows with the front tires set at a 1,52 metres (60 inch) tread setting. It has been found however that an end-of-field turn around within a span of 8 rows spaced on 0,76 metres (30 inch) centers is desirable. Since both the axle steer and wheel steer functions have maximum stroke limits, which are preferably phased to be attained simultaneously, this goal is not easily reached when narrow tread settings, such as the 1,52 metres (60 inch) tread setting, are utilized.

When a narrow tread setting is selected, the stroke limits for the wheel steer have to be set to prevent the wheels from impacting the chassis on tight turns. As a result, the full axle steering ability has not been reached under these conditions. Allowing additional pivotal movement of the front axle increases the amount of wheel steer available because the lateral shifting of the front axle relative to the chassis provides greater clearance for the inboard wheel. Accordingly, a compound steering mechanism that would change the relationship between the amount of wheel steer for a given amount of axle steer would allow the compound steering mechanism to be fully utilized under narrow tread setting conditions.

It is therefore an object of the present invention to overcome the aforementioned disadvantages of the prior art by providing a compound steering mechanism that can be selectively adjusted to provide alternate steering behaviours.

According to a first aspect of the present invention a compound steering apparatus for a vehicle is provided comprising :
- a chassis;
- a front axle pivotally mounted to said chassis;
- a pair of laterally spaced wheels pivotally mounted by king pins carried on said axle to define respective axes of pivotal rotation; and
- linkage means interconnecting said chassis, said wheels and said axle to effect simultaneous pivotal movement of said axle and said wheels to effect a turning of said vehicle.

The compound steering apparatus is characterized in that the linkage means has at least two alternate selectable configurations to provide different steering behaviours; each of said different steering behaviours effecting a maximum permissible pivotal movement of said axle relative to said chassis substantially simultaneously with the maximum permissible pivotal movement of said wheels relative to said axle corresponding to respective different lateral spacings of said wheels.

According to a second aspect of the present invention a tractor is provided comprising:
- a chassis;
- a transversely oriented front axle pivotally mounted to said chassis, said axle being limited to a predetermined maximum angular pivotal rotation relative to said chassis;
- a pair of laterally spaced front wheels pivotally connected to laterally opposed ends of said front axle by king pins defining an axis of pivotal rotation of said front wheels relative to said front axle;
- a steering arm associated with each said front wheel and extending outwardly therefrom;
- linkage means interconnecting said chassis and said steering arms; and
- a steering mechanism operatively associated with said front wheels to effect a selective pivotal rotation of said front wheels relative to said axle.

The tractor is characterized in that :
- said front wheels are positionable on said front axle in a plurality of different lateral spacings;
- each said steering arm has formed therein at least two mounting holes; and
- said linkage means includes a tie rod selectively connected to a corresponding said steering arm at a selected one of said mounting holes, said linkage means effecting a pivotal movement of said axle relative to said chassis in response to a pivotal movement of said wheels relative to said axle.

It is an advantage of this invention that full utilization of the compound steering mechanism can be attained in both narrow and wide tread settings for the tractor and as such the operator is capable of selecting the compound steering behaviour that is best suited for his particular farming operation.

The behaviour of the compound steering mechanism can be selectively modified easily and conveniently by changing the tie rod mounting position whereby the operator of a tractor can tailor his steering behaviour as a function of the size of the tractor tire, tread width and desired task to be accomplished. By changing the tie rod mounting position, the amount of wheel steer for a given amount of axle steer movement can be adjusted such that the full benefits of the compound steering mechanism can be utilized for both wide and narrow tread settings.

The connection of the tie rods at a first position provides a predetermined amount of pivotal movement of the front wheels for a given amount of corresponding pivotal movement of the front axle to which the wheels are mounted. An alternative second position changes the amount of pivotal movement of the front wheels for the given amount of axle movement to provide a more suitable steering performance when the front wheels are laterally spaced at a different tread setting. Accordingly, the compound steering mechanism can be selected for optimum steering performance with wide or narrow tread settings.

The advantages of this invention will become apparent upon consideration of the following detailed disclosure of the invention, especially when taken into conjunction with the accompanying drawings wherein:
Figure 1 is a top plan view of a front axle assembly for an agricultural tractor incorporating the principles of the instant invention, the front portion of the tractor chassis overlying the front axle assembly being shown in phantom and the tie rod system being configured in a narrow-tread setting;
Figure 2 is a cross-sectional view of the front axle assembly taken along lines 2-2 of Figure 1, the front portion of the tractor chassis being shown in phantom relative to the front axle assembly;
Figure 3 is a top plan view of the front axle assembly similar to the view of Figure 1, but with the front ballast assembly removed for purposes of clarity, the tie rod system being configured in a wide-track setting;
Figure 4 is a top plan view of the front axle assembly similar to the view of Figure 3 but with the steerable axle and steerable wheels moved to effect a left turn of the vehicle;
Figure 5 is a top plan view of the front axle assembly similar to the view of Figure 3, but with the tie rod system being configured in a narrow-track setting; and
Figure 6 is a top plan view of the front axle assembly similar to the view of Figure 5, but with the steerable axle and steerable wheels moved to effect a left turn of the vehicle.

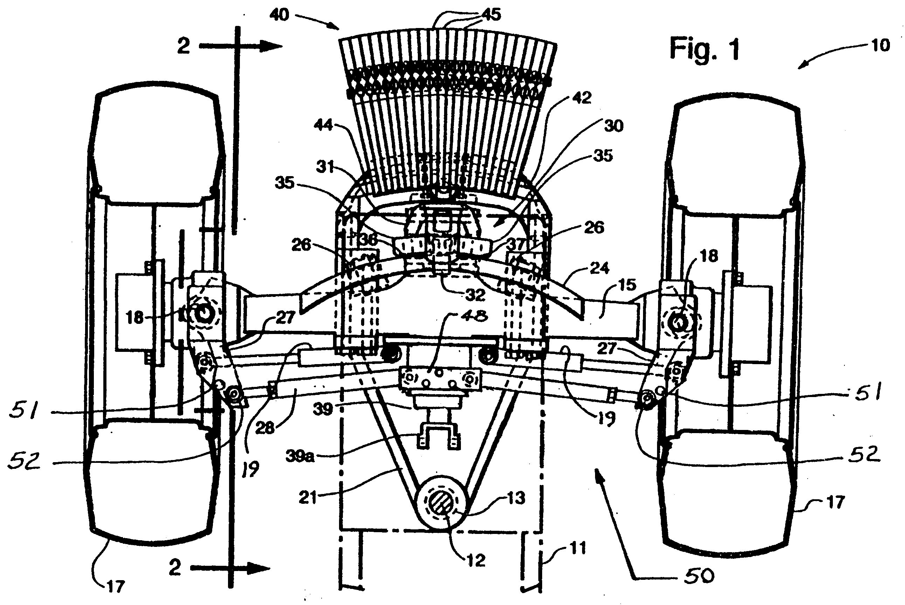

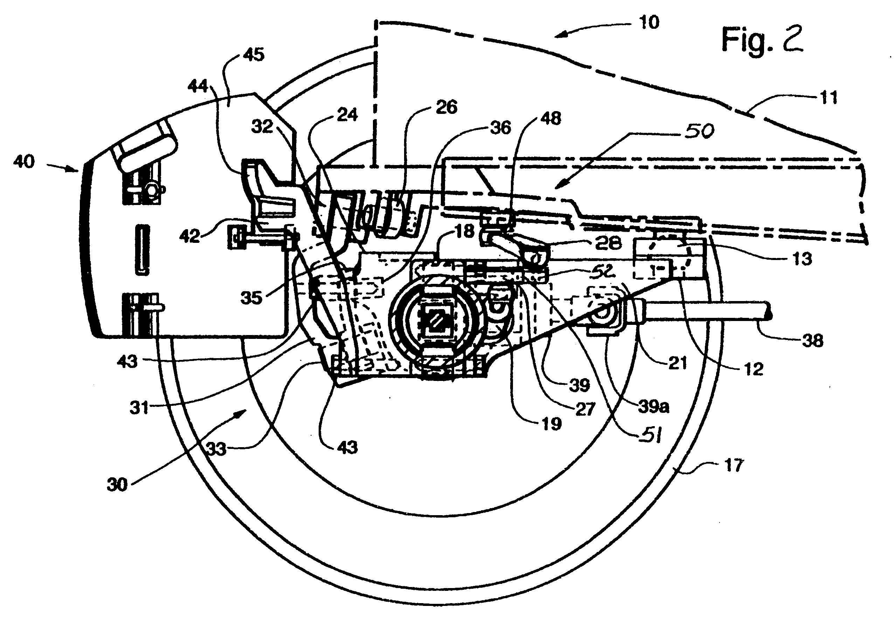

Referring now to Figures 1 and 2, a compound steering mechanism, including a laterally shiftable front axle assembly, for an agricultural tractor or other vehicle, pivotally connected to the vehicle chassis to provide a decreased turning radius for a given wheel base, can best be seen. The front axle assembly 10 is pivotally connected to the tractor chassis 11 for pivotal movement about a generally vertical axis 12, thereby allowing the front axle assembly 10 to rotate about the pivot axis 12 and shift the front axle assembly 10 laterally relative to tractor chassis 11. The pivot axis 12 includes a spherical ball joint 13 to permit some oscillatory movement of the front axle 15 relative to the chassis 11. The details of a laterally shiftable front axle assembly to provide better turning capabilities is described in detail in US-A-5.046.577.

The front axle assembly 10 includes a transversely extending axle member 15 having pivotally mounted on the respective laterally opposing ends thereof a pair of steerable wheels 17 pivotable about respective nearly vertical king pin axes 18 to effect a steering of the wheels 17 relative to the axle member 15. A pair of hydraulic cylinders 19 interconnect the axle member 15 and the steerable wheels 17 via a steering arm 27 to control the pivotable movement of the wheels 17 relative to the axle member 15, and thereby, effect steering.

The front axle member 15 carries a rearwardly extending subframe member 21 which carries the vertical pivot 12 and ball joint 13 connected to the tractor chassis 11 rearwardly of the front axle member 15 yet generally positioned laterally between the front steerable wheels 17. A front yoke assembly 30 suspends the laterally shiftable front axle member 15 from the forward end of the tractor chassis 11 to permit a pivotal movement of the front axle assembly 10 relative to tractor chassis 11 about the vertical axis 12.

To facilitate relative movement between the front axle assembly 10 and the tractor chassis 11 when the axle is fully oscillated, the front axle member 15 is also provided with an arcuate track 24 having a center of curvature coincident with the pivot axis 12. The chassis 11 carries a pair of laterally spaced rollers 26 that are engageable with the arcuate track 24 when the front axle member 15 oscillates about a generally horizontal axis in response to changing ground contours and undulations so that the rollers 26 provide a limit to the vertical movement of the front axle member 15 relative to the tractor chassis 11 due to an engagement thereof with the arcuate track 24.

A pair of tie rods 28 are detachably connected to a plate member 48, which is detachably mounted to the underside of the chassis 11, and interconnect the respective steering arms 27, forming a part of the steerable wheels 17. The tie rods 28 transmit coordinated steerable movement of the wheels 17 relative to each other and to the front axle member 15 and effect a lateral shifting movement of the chassis 11 relative to the front axle 15, as described in greater detail below. Although the front axle 15 is pivotally connected to the chassis 11, the front axle 15 is engaged with the ground through the wheels 17 and the actual pivotal movement results in a lateral shifting of the chassis 11. Looking at the front axle 15 from the reference frame of the chassis 11, the appearance is that the axle 15 shifts relative thereto and any reference hereinafter describing the pivotal movement of the front axle member 15 relative to the chassis is so described. Because of the fixed length of the tie rods 28 interconnecting the chassis 11, via the plate member 48, and the wheels 17 at one of the mounting holes 51, 52 in the respective steering arms 27 spaced inwardly toward the center of the chassis 11 and rearwardly from the respective pivot axis or king pin 18 for the corresponding steerable wheel 17, a pivotable movement of the wheel 17 about the corresponding pivot axis 18 will result in a corresponding shifting of the front axle 15 relative to the longitudinal centerline C of the tractor chassis 11, along which the vertical pivot axis 12 is positioned.

The front yoke assembly 30 has a contoured front carrier member 31 pivotally connected at a second pivot joint 32 to the chassis 11. The front carrier member 31 also carries a pair of transversely spaced third and fourth lower pivots 33, 34, respectively, for pivotally supporting a corresponding pair of dog bone-shaped links 35 which, in turn, are pivotally connected to the front axle member 15 by respective transversely spaced fifth and sixth pivots 36, 37. Each of the pivots 32, 33, 34, 36 and 37 associated with the front yoke assembly 30 have a corresponding pivot axis aligned with the ball joint 13, which is located on the pivot axis 12. Accordingly, the pivot axis for each of the five pivots 32, 33, 34, 36 and 37 have a nonparallel relationship intersecting a common point at the center of the ball joint 13.

As a result, the pivotal movement of the front axle assembly 10 relative to the tractor chassis 11, resulting in a lateral shifting of the front axle member 15, is accomplished through a four-bar linkage which has very little vertical component associated with the movement thereof, yet the chassis 11 maintains a substantially uniform elevation relative to the front axle 15 throughout the range of relative movement between the front steerable axle and the vehicle chassis. The main pivot axis for lateral shifting and vertical oscillatory movement of the front axle 15 is the axis defined by the second pivot joint 32 extending through the ball joint 13, as both the pivot 32 and the ball joint 13 are fixed relative to the chassis 11. The generally transverse lines defined by the tie rods 28 extend through this main pivot axis extending through pivot 32 and ball joint 13 so that movements of the axle 15, especially oscillatory movements, causes a minimum additional steering effect to the axle 15.

As depicted in Figures 1 and 2, the front axle assembly 10 may be powered in a conventional manner from the transmission (not shown) carried by the tractor chassis 11 through the front wheel drive shaft 38 connected to a conventional front wheel drive mechanism 39 to operatively power the rotation of the steerable wheels 15 to facilitate movement of the tractor chassis 11 over the ground. One skilled in the art will readily realize that the provision of a front wheel drive mechanism 39 is optional and independent of the operation of the compound steering mechanism permitting a lateral shifting of the tractor chassis 11 relative to the front axle member 15. The continuous driving of the front wheels 17 during steering operation involving a lateral shifting of the tractor chassis 11 relative to the front axle member 15 can be accommodated by the universal joint 39a interconnecting the front wheel drive mechanism 39 and the drive shaft 38.

The tractor ballast assembly 40 is carried by the front axle assembly 10 intermediate of the steerable wheels 17 at a position centrally therebetween. A carrier 42 is detachably connected by fasteners 43 to the front axle member 15 to extend forwardly thereof and forwardly of the tractor chassis 11, as well. The carrier 42 is provided with an arcuate mounting ring 44 upon which individual suitcase weights 45 are supported. Since the carrier 42 moves with the front axle member 15 relative to the chassis 11, the position of the ballast assembly 40 relative to the laterally spaced front wheels 17 remains relatively fixed, thereby maintaining a substantially constant weight distribution relative to the front wheels 17.

Furthermore, since the ballast assembly 40 moves with the axle member 15, the steering clearance between the pivotally movable wheels 17 and the ballast assembly 40 does not change as the front axle 15 shifts laterally and/or oscillates vertically. As a result, the operator may mount additional weight units 45 to increase the amount of ballast on the front axle 15 without decreasing the tire clearance below that which is acceptable for traditional tractors. Greater detail in the construction and assemblage of the individual weights 45 to form the ballast assembly 40 can be found in US-A-5.219.180.

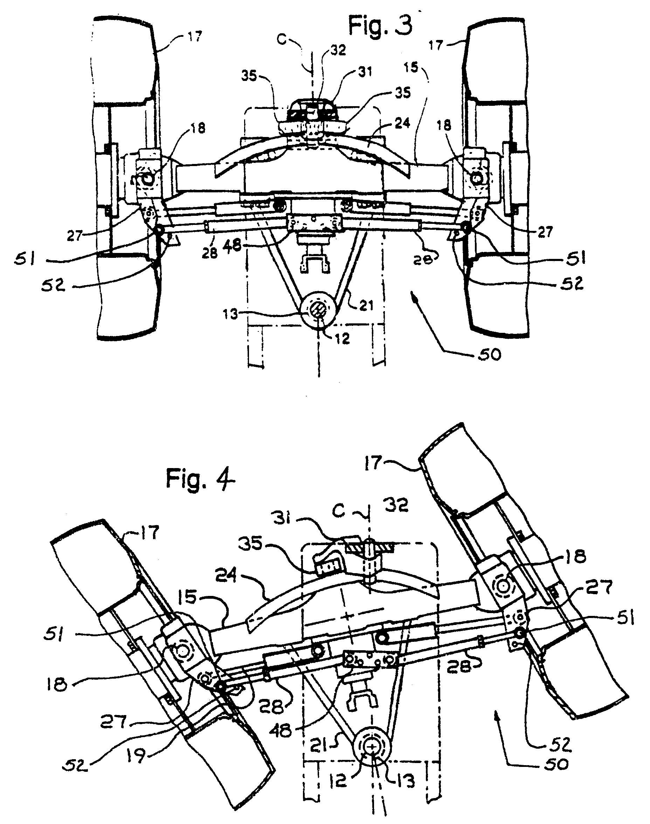

The configuration of the components of the front yoke assembly 30, chassis 11 and front steerable axle 15, as the tractor steering mechanism 19 effects a turn of the tractor chassis 11, is best seen in Figures 3 - 6. The dog-bone link members 35 diverge upwardly so that the fifth and sixth pivot joints are transversely spaced further apart than the third and fourth lower pivot joints to provide a nearly parallel planar motion of the chassis 11 relative to the axle 15 and an increased measure of stability to the assembly 30. A turning of the steerable wheels 17 causes a corresponding relative shifting between the steerable axle 15 and the chassis 11, which in the frame of reference of the chassis 11 causes a shifting of the axle 15 in the direction of the intended turn. As described above, this relative shifting of the axle 15 shortens the turning radius and allows the tractor to make a tighter turn.

During such a turn, the tie rods 28 force the chassis 11 in the opposite direction from which the turn is being made, which in the frame of reference of the chassis 11 causes a relative movement of the axle 15 about the first pivot axis 12 into the direction of the turn being made. When the axle 15 moves relative to the chassis 11, the carrier member 31 pivots about its pivotal connection 32 with the chassis 11, swinging the third and fourth lower pivots 33, 34 and the connected dog-bone link members 35 toward the direction the turn is being made. Because of the configuration of the four pivots 33, 34, 36 and 37 associated with the two link members 35, the fifth and sixth upper pivots 36, 37 swing toward the direction of the turn in a parallel orientation to which they were centrally positioned. As a result, the vertical movement of the axle 15 relative to the chassis 11 is minimized during turns. The disclosed assembly 30 has been found to result in a lowered elevational change of the chassis 11 of approximately 6.8 millimetres (a quarter of an inch) during turns, and during this minimal vertical movement, the chassis 11 remains in a parallel orientation with respect to its position prior to the turn.

The spherical ball joint 13 at the first pivot 12 accommodates any limited vertical movement of the axle 15 relative to the chassis 11 and allows oscillatory or lateral pitching movement of the axle 15 relative to the chassis 11 about the pivot 32. This oscillatory movement of the axle 15 can cause substantial pivotal movement of the carrier member 31 about the pivot 32. This particular configuration of components pivotally mounting the axle 15 to the chassis 11 for relative lateral movement results in a minimum of elevational changes for the chassis, irrespective of the movement of the axle 15, which in turn provides the ability to utilize front mounted attachments for the chassis 11 without affecting their operation during turns. Furthermore, the respective tie rods 28 are oriented such that the inwardly extending line of each of the tie rods 28 from the mounting hole 51, 52 in the respective steering arms 27 will intersect with the pivot axis extending between the pivot joint 32 and the center of the ball joint 13. This orientation of the tie rods 28 minimizes any steering effect to the wheels 17 whenever the axle 15 oscillates relative to the chassis 11.

The centering of all the pivot axes associated with the pivot joints 32, 33, 34, 36 and 37 at the center of the ball joint 13 allows the unrestricted pivotal movement of the carrier member 31 and the dog-bone link members 35 during the turning movements and for oscillatory or pitching movements as well, without requiring additional motion components to be accommodated during the relative movement of the axle 15 and the chassis 11. It will be understood by one skilled in the art that the specific orientation of these respective pivots 32, 33, 34, 36 and 37 requires the formation of a specially formed carrier member 31 and dog-bone members 35 to orient properly the respective pivots. Furthermore, the carrier member 31 has a somewhat arcuate shape to bow out around the dog-bone members 35 for their unrestricted movement between the carrier member 31 and the axle 15.

The steering arms 27 are provided with alternate mounting holes 51 and 52 for the selective connection of the corresponding tie rods 28. The connection of the tie rod 28 to the corresponding mounting hole 51 provides a different steering behaviour than if the tie rod were connected to the mounting hole 52, as will be described in greater detail below. As best seen in Figure 1, the steering arms 27 are oriented so as to be directed inwardly toward the longitudinal centerline C of the tractor. Since the mounting hole 52 is positioned near the end of the steering arm 27, the mounting hole 52 is oriented closer to the centerline C and further away from the king pin pivot axis 18 than the alternate mounting hole 51.

One skilled in the art will readily realize that the front wheels 17 are orientable on the axle 15 so as to provide different lateral spacings between the wheels 17, which can be referred to as tread settings. The tread settings are typically adjustable from a narrow-tread setting of 0,76 metres (60 inches) to a wide-tread setting of 1,83 metres (72 inches) to 2,23 metres (88 inches). The narrow-tread setting of 1,52 metres (60 inches) is intended to correspond to crop planted in rows spaced 0,76 metres (30 inches) apart so that the tractor wheels 17 will fall between the rows of planted crops when the tractor is working in such planted crop. A wide-tread setting of about 1,83 metres (72 inches) is commonly provided to give the operator the best handling characteristics for the tractor.

One skilled in the art will recognize that the amount of pivotal movement of the front wheels 17 before interfering with the tractor chassis 11 can be greater when the wheels 17 are at a wide-tread setting because the wheels 17 are physically positioned further away from the chassis 11. The pivotal movement of the front axle 15 with the compound steering mechanism 50, as described above, permits a greater pivotal movement of the front wheels 17 than conventional steering mechanisms (not shown) because the relative shifting of the axle 15 to the chassis 11 increases the distance between the inboard wheel 17 and the chassis 11 when turning.

It has been found that the orientation of the various components of the compound steering mechanism 50 to provide the minimum turning radius when the front wheels 17 are in the wide-tread setting does not provide the same minimum turning radius when the wheels 17 are in a narrow-tread setting. Conventional stops (not shown) are provided on the front axle assembly 10 to limit the amount of pivotal movement of the wheels 17 relative to the axle 15 and of the axle 15 relative to the chassis 11. The configuration of the compound steering mechanism 50 should provide a maximum allowable wheel 17 movement simultaneously with the maximum axle 15 movement.

A connection of the tie rods 28 in the respective mounting holes 51 provides the desired simultaneous maximum pivotal movement of the wheels 17 and axle 15 when the wheels are set in a wide-tread setting of at least 1,83 metres (72 inches) and can provide a minimum turning diameter of 4,6 metres (15 feet). This same connection of the tie rod 28 to the steering arm 27, will only provide a minimum turning diameter of 9,2 metres (30 feet) when the wheels 17 are oriented in a narrow-tread setting because the maximum allowable wheel 17 movement relative to the axle 15 is arrested by the conventional stops (not shown) before the axle 15 can achieve its full pivotal movement relative to the chassis 11.

An enhanced steering behaviour for the compound steering mechanism 50 can be obtained for the narrow-tread wheel 17 setting by relocating the tie rod 28 connection with the steering arm 27 at the alternative mounting hole 52. Since the distance between the mounting hole 52 and the king pin 18 is greater than the distance between the mounting hole 51 and the same king pin 18, the same identical stroke of the hydraulic steering cylinder 19 causes a greater amount of axle 15 movement relative to the chassis 11 when the mounting hole 52 is used for connection of the tie rod 28. Looking at the pivotal movement of the axle 15 from the perspective of the wheel 17, the remounting of the tie rod 28 to the narrow setting mounting hole 52 will provide a larger amount of axle 15 rotation (and, therefore, relative chassis movement) for each degree of rotation of the wheel 17 relative to the axle 15. As a result, the maximum pivotal movement of the axle 15 can be attained simultaneously with the maximum allowable pivotal movement of the wheel 17.

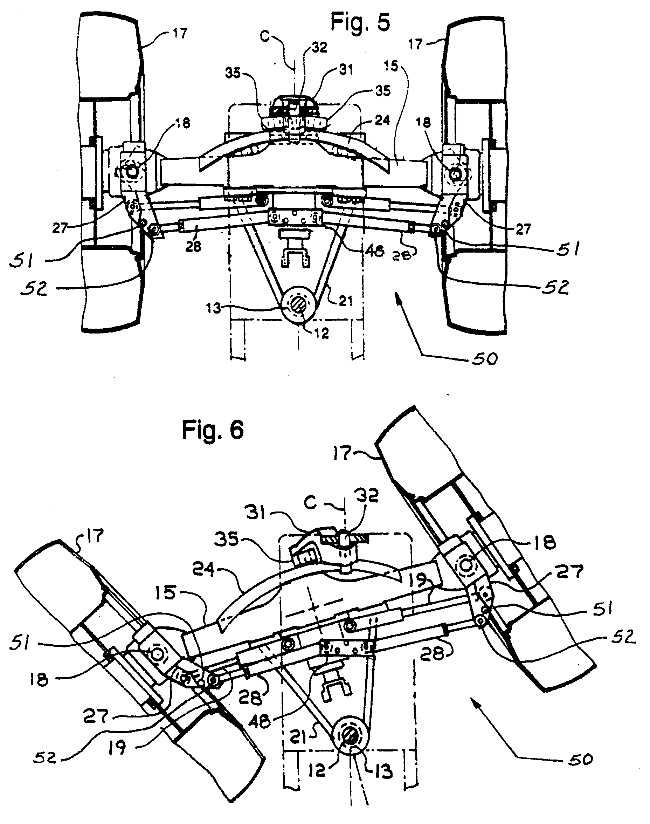

This relationship can be seen in the comparison of Figure 4 with Figure 6. In each of these Figures, the wheels 17 are oriented in the narrow-tread setting. In Figure 4, the tie rod 28 is connected to the steering arm via the wide-tread mounting hole 51. The maximum allowable pivotal movement of the wheel 17 relative to the axle 15 has been accomplished, yet the axle 15 has not achieved its maximum allowable pivotal movement. By relocating the tie rod 28 to the narrow-tread mounting hole 52 as depicted in Figure 6, the same pivotal movement of the wheel 17 will cause a greater pivotal movement of the axle 15 that creates a larger distance between the chassis 11 and the wheel 17, which in turn permits a still greater pivotal movement of the wheel 17 relative to the axle 15. One skilled in the art will recognize, however, that the extent of pivotal movement of the wheels 17 will not be as great with the wheels in a narrow-tread setting as would be available with the wheels at a wide-tread setting. Nevertheless, the maximum permissible pivotal movement of the wheels 17 about the king pin axis 18 is achieved simultaneously with the attainment of the maximum pivotal movement of the axle 15 when the narrow-tread setting is utilized, since each degree of pivotal movement of the wheel 17 causes a greater degree of pivotal movement of the axle 15 than when the wide-tread setting is utilized.

One skilled in the art will recognize that the changes in steering behaviour could be accomplished through a relocation of the inboard mounting of the tie rods 28 with the chassis 11; however, such a configuration would result in a less conveniently accessible apparatus and a required redesign of the chassis 11. While only two alternative tie rod mounting holes 51, 52 have been shown and described above, one skilled in the art will readily realize that a multiple number of mounting holes could be provided to maximize the steering behaviour for each of the alternative tread settings of the front wheels 17, although from a practical consideration, two settings corresponding to wide and narrow-tread settings would be preferable and provide satisfactory results. Conventional quick-adjust tie rods 28 would be beneficial in a compound steering mechanism 50 configured as described above as the distance between the inboard and outboard ends of the tie rods 28 varies depending on the mounting hole 51, 52 selected.

## Claims

1. A compound steering apparatus for a vehicle comprising:
- a chassis (11);
- a front axle (15) pivotally mounted to said chassis (11);
- a pair of laterally spaced wheels (17) pivotally mounted by king pins (18) carried on said axle (15) to define respective axes of pivotal rotation; and
- linkage means (28, 48, 27) interconnecting said chassis (11), said wheels (17) and said axle (15) to effect simultaneous pivotal movement of said axle (15) and said wheels (17) to effect a turning of said vehicle; and
characterized in that the linkage means (28, 48, 27) has at least two alternate selectable configurations to provide different steering behaviours; each of said different steering behaviours effecting a maximum permissible pivotal movement of said axle (15) relative to said chassis (11) substantially simultaneously with the maximum permissible pivotal movement of said wheels (17) relative to said axle (15) corresponding to respective different lateral spacings of said wheels (17).

2. A compound steering apparatus according to claim 1 characterized in that said linkage means (28, 48, 27) comprises a steering arm (27) associated with each said wheel (17) and a corresponding tie rod (28); said steering arm (27) having formed therein first and second mounting holes (51, 52) for the selective alternative connection of said corresponding tie rod (28) thereto and said second mounting hole (52) being located further from the corresponding said king pin (18) than said first mounting hole (51).

3. A compound steering apparatus according to claim 2 characterized in that the connection of the corresponding said tie rod (28) to said steering arm (27) at said first mounting hole (51) provides a smaller amount of angular rotation of said axle (15) relative to said chassis (11) for each increment of angular rotation of the corresponding said wheel (17) than when said tie rod (28) is connected to said steering arm (27) at said second mounting hole (52).

4. A tractor comprising:
- a chassis (11);
- a transversely oriented front axle (15) pivotally mounted to said chassis (11), said axle (15) being limited to a predetermined maximum angular pivotal rotation relative to said chassis (11);
- a pair of laterally spaced front wheels (17) pivotally connected to laterally opposed ends of said front axle (15) by king pins (18) defining an axis of pivotal rotation of said front wheels (17) relative to said front axle (15);
- a steering arm (27) associated with each said front wheel (17) and extending outwardly therefrom;
- linkage means (28) interconnecting said chassis (11) and said steering arms (27); and
- a steering mechanism (19, -) operatively associated with said front wheels (17) to effect a selective pivotal rotation of said front wheels (17) relative to said axle (15); and
characterized in that :
- said front wheels (17) are positionable on said front axle (15) in a plurality of different lateral spacings;
- each said steering arm (27) has formed therein at least two mounting holes (51, 52); and
- said linkage means includes a tie rod (28) selectively connected to a corresponding said steering arm (27) at a selected one of said mounting holes (51, 52), said linkage means (28) effecting a pivotal movement of said axle (15) relative to said chassis (11) in response to a pivotal movement of said wheels (17) relative to said axle (15).

5. A tractor according to claim 4 characterized in that said linkage means (28) effects a generally simultaneous pivotal movement of said front axle (15) relative to said chassis (11) in response to a pivotal movement of said steering mechanism (19, -).

6. A tractor according to claim 4 or 5 characterized in that said mounting holes (51, 52) are spaced at different intervals from the corresponding said king pin (18).

7. A tractor according to any of the claims 4 to 6 characterized in that the mounting of said tie rod (28) at each respective mounting hole (51, 52) provides a different ratio of the amount of angular rotation of said front axle (15) for each given increment of angular rotation of said wheels (17) than each of the other said mounting holes (51, 52).

8. A tractor according to any of the claims 4 to 7 characterized in that the connection of said tie rod (28) to the corresponding said steering arm (27) at each respective mounting hole (51, 52) provides the attainment of the maximum permissible angular pivotal rotation of said axle (15) substantially simultaneously with the attainment of the maximum permissible pivotal rotation of said wheels (17) relative to said front axle (15) for a given lateral spacing of said wheels (17).

9. A tractor according to any of the claims 4 to 8 characterized in that said steering mechanism comprises a hydraulic cylinder (19) interconnecting said front axle (15) and at least one of said wheels (17).

10. A tractor according to any of the claims 4 to 9 characterized in that each said steering arm (27) is provided with two mounting holes (51, 52), one of said mounting holes (52) corresponding to a narrow-tread setting of said front wheels and the other of said mounting holes (51) corresponding to a wide-tread setting of said front wheels (17).

11. A tractor according to any of the claims 4 to 10 characterized in that said linkage means (28) includes a pair of tie rods (28) connected to said chassis (11) and extending outwardly therefrom to respective said steering arms (27) for connection thereto.

12. A tractor according to any of the claims 4 to 11 characterized in that said steering arms (27) extend rearwardly from the corresponding said wheel (17), said mounting holes (51, 52) being spaced along the length thereof so that the distance between the corresponding said king pin (18) and the respective said mounting holes (51, 52) is different.

13. A tractor according to any of the claims 4 to 12 characterized in that said linkage means comprises quick-adjust tie rods (28) enabling a fast adjustment of the operative length thereof as the distance between the inboard and outboard ends of the tie rods (28) varies depending on the mounting hole (51, 52) selected.

## Patentansprüche

1. Verbundlenkungsvorrichtung für ein Fahrzeug, mit:
- einem Fahrgestell (11),
- einer Vorderachse (15), die schwenkbar an dem Fahrgestell (11) befestigt ist,
- zwei mit seitlichem Abstand angeordneten Rädern (17), die schwenkbar über auf der Achse (15) gehalterte Achsschenkelbolzen (18) befestigt sind, um jeweilige Achsen einer Schwenkdrehung zu definieren, und
- einer Gestängeeinrichtung (28, 48, 27), die das Fahrgestell (11), die Räder (17) und die Achse (15) miteinander verbindet, um eine gleichzeitige Schwenkbewegung der Achse (15) und der Räder (17) zu bewirken, um eine Kurvenbewegung des Fahrzeugs zu bewirken,
dadurch gekennzeichnet, daß
die Gestängeeinrichtung (28, 48, 27) zumindest zwei abwechselnd auswählbare Konfigurationen zur Erzielung unterschiedlicher Lenkungsverhaltensweisen aufweist, wobei jede der unterschiedlilichen Lenkungsverhaltensweisen eine maximal zulässige Schwenkbewegung der Achse (15) bezüglich des Fahrgestells (11) im wesentlichen gleichzeitig mit der maximal zulässigen Schwenkbewegung der Räder (17) gegenüber der Achse (15) entsprechend den jeweiligen unterschiedlichen seitlichen Abständen der Räder (17) bewirkt.

2. Verbundlenkungsvorrichtung nach Anspruch 1,
dadurch gekennzeichnet,
daß die Gestängeeinrichtung (28, 48, 27) einen jedem Rad (17) zugeordneten Lenkarm (27) und eine entsprechende Spurstange (28) umfaßt, daß in dem Lenkarm (27) erste und zweite Befestigungsbohrungen (51, 52) für den selektiven alternativen Anschluß der entsprechenden Spurstange (28) an dem Lenkarm ausgebildet sind, wobei die zweite Befestigungsbohrung (52) weiter von dem entsprechenden Achsschenkelbolzen (18) entfernt ist, als die erste Befestigungsbohrung (51).

3. Verbundlenkungsvorrichtung nach Anspruch 2,
dadurch gekennzeichnet,
daß die Verbindung der entsprechenden Spurstange (28) mit dem Lenkarm (27) an der ersten Befestigungsbohrung (51) ein kleineres Ausmaß der winkeldrehung der Achse (15) gegenüber dem Fahrgestell (11) für jeden Teilbetrag der Winkeldrehung des entsprechenden Rades (17) ergibt, als wenn die Spurstange (28) mit dem Lenkarm (27) an der zweiten Befestigungsbohrung (52) verbunden ist.

4. Traktor mit:
- einem Fahrgestell (11),
- einer in Querrichtung ausgerichteten Vorderachse (15), die schwenkbar an dem Fahrgestell (11) befestigt ist, wobei die Achse (15) auf eine vorgegebene maximale Schwenk-Winkeldrehung gegenüber dem Fahrgestell (11) begrenzt ist,
- einem Paar von mit seitlichem Abstand voneinander angeordneten Vorderrädern (17), die schwenkbar mit seitlich gegenüberliegenden Enden der Vorderachse (15) über Achsschenkelbolzen (18) verbunden sind, die eine Achse der Schwenkdrehung der Vorderräder (17) gegenüber der Vorderachse (15) definieren,
- einem mit jedem Vorderrad (17) verbundenen Lenkarm (27), der sich von dem Vorderrad nach außen erstreckt,
- einer Gestängeeinrichtung (28), die das Fahrgestell (11) und die Lenkarme (27) miteinander verbindet, und
- einem Lenkungsmechanismus (19), der betriebsmäßig den Vorderrädern (17) zugeordnet ist, um eine selektive Schwenkdrehung der Vorderräder (17) gegenüber der Achse (15) zu bewirken,
dadurch gekennzeichnet, daß:
- die Vorderräder (17) auf der Vorderachse (15) auf eine Vielzahl von unterschiedlichen seitlichen Abständen positionierbar sind,
- in jedem Lenkarm (27) zumindest zwei Befestigungsbohrungen (51, 52) ausgebildet sind, und
- die Gestängeeinrichtung eine Spurstange (28) einschließt, die selektiv mit einem entsprechenden Lenkarm (27) an einer ausgewählten der Befestigungsbohrungen (51, 52) verbunden ist, wobei die Gestängeeinrichtung (28) eine Schwenkbewegung der Achse (15) gegenüber dem Fahrgestell (11) in Abhängigkeit von einer Schwenkbewegung der Räder (17) gegenüber der Achse (15) bewirkt.

5. Traktor nach Anspruch 4,
dadurch gekennzeichnet,
daß die Gestängeeinrichtung (28) eine allgemein gleichzeitige Schwenkbewegung der Vorderachse (15) gegenüber dem Fahrgestell (11) in Abhängigkeit von einer Schwenkbewegung des Lenkungsmechanismus (19, -) bewirkt.

6. Traktor nach Anspruch 4 oder 5,
dadurch gekennzeichnet,
daß die Befestigungsbohrungen (51, 52) unter unterschiedlichen Abständen von dem entsprechenden Achsschenkelbolzen (18) angeordnet sind.

7. Traktor nach einem der Ansprüche 4 bis 6,
dadurch gekennzeichnet,
daß die Befestigung der Spurstange (28) an jeder jeweiligen Befestigungsbohrung (51, 52) ein unterschiedliches Verhältnis des Ausmaßes der Winkeldrehung der Vorderachse (15) für jeden vorgegebenen Teilschritt der winkeldrehung der Räder (17) ergibt, als jede der anderen Befestigungsbohrungen (51, 52).

8. Traktor nach einem der Ansprüche 4 bis 7,
dadurch gekennzeichnet,
daß die Verbindung der Zugstange (28) mit dem entsprechenden Lenkarm (27) an jeder jeweiligen Befestigungsbohrung (51, 52) das Erreichen der maximal zulässigen Schwenk-Winkeldrehung der Achse (15) im wesentlichen gleichzeitig mit dem Erreichen der maximal zulässigen Schwenkdrehung der Räder (17) gegenüber der Vorderachse (15) für einen vorgegebenen seitlichen Abstand der Räder (17) ergibt.

9. Traktor nach einem der Ansprüche 4 bis 8,
dadurch gekennzeichnet,
daß der Lenkungsmechanismus einen Hydraulikzylinder (19) umfaßt, der die Vorderachse (15) und zumindest eines der Räder (17) miteinander verbindet.

10. Traktor nach einem der Ansprüche 4 bis 9,
dadurch gekennzeichnet,
daß jeder Lenkarm (27) mit zwei Befestigungsbohrungen (51, 52) versehen ist, wobei eine der Befestigungsbohrungen (52) einer schmalen Spurweiteneinstellung der Vorderräder entspricht, während die andere Befestigungsbohrung (51) einer Einstellung mit breiter Spurweite der Vorderräder (17) entspricht.

11. Traktor nach einem der Ansprüche 4 bis 10,
dadurch gekennzeichnet,
daß die Gestängeeinrichtung (28) zwei Spurstangen (28) einschließt, die mit dem Fahrgestell (11) verbunden sind und sich von diesem aus zu den jeweiligen Lenkarmen (27) für eine Verbindung mit diesen nach außen hin erstrecken.

12. Traktor nach einem der Ansprüche 4 bis 11,
dadurch gekennzeichnet,
daß sich die Lenkarme (27) von dem entsprechenden Rad (17) aus nach hinten erstrecken, daß die Befestigungsbohrungen (51, 52) entlang der Länge der Lenkarme mit Abstand derart angeordnet sind, daß der Abstand zwischen dem entsprechenden Achsschenkelbolzen (18) und den jeweiligen Befestigungsbohrungen (51, 52) unterschiedlich ist.

13. Traktor nach einem der Ansprüche 4 bis 12,
dadurch gekennzeichnet,
daß die Gestängeeinrichtung Schnelleinstell-Spurstangen (28) umfaßt, die eine schnelle Einstellung der Betriebslänge der Spurstange ermöglicht, wenn sich der Abstand zwischen den innenliegenden und außenliegenden Enden der Spurstangen (28) in Abhängigkeit von der ausgewählten Befestigungsbohrung (51, 52) ändert.

## Revendications

1. Appareil de direction mixte pour un véhicule comprenant:
- un châssis (11);
- un essieu avant (15) monté à pivotement audit châssis (11);
- une paire de roues latérales espacées (17), montées à pivotement par des axes de pivotement (18) soutenus par ledit essieu (15) pour définir les axes respectifs de pivotement; et
- des moyens de liaison (28, 48, 27) reliant ledit châssis (11), lesdites roues (17) et ledit essieu (15) pour réaliser simultanément un mouvement de pivotement dudit essieu (15) et desdites roues (17) pour que ledit véhicule effectue un virage; et
caractérisé en ce que les moyens de liaison (28, 48, 27) possèdent au moins deux configurations différentes possibles pour fournir des comportements différents de direction; chacun desdits comportements différents de direction réalisant un mouvement de pivotement maximum admissible dudit essieu (15) par rapport audit châssis (11) essentiellement en simultanéité avec le mouvement de pivotement maximum admissible desdites roues (17) par rapport audit essieu (15) correspondant aux espacements latéraux respectifs différents desdites roues (17).

2. Appareil de direction mixte selon la revendication 1, caractérisé en ce que lesdits moyens de liaison (28, 48, 27) comprennent un bras (27) de direction associé à chacune desdites roues (17) et une barre (28) d'accouplement; ledit bras (27) de direction étant pourvu en son sein d'un premier et d'un second trous (51, 52) de montage pour son raccordement sélectif alternatif à ladite barre (28) correspondante d'accouplement et ledit second trou (52) de montage étant situé à une plus grande distance dudit pivot (18) correspondant de direction que ledit premier trou (51) de montage.

3. Appareil de direction mixte selon la revendication 2, caractérisé en ce que le raccordement de ladite barre (28) correspondante d'accouplement audit bras (27) de direction au niveau dudit premier trou (51) de montage fournit une valeur plus faible de rotation angulaire dudit essieu (15) par rapport audit châssis (11) pour chaque incrément de rotation angulaire de ladite roue (17) correspondante, que lorsque ladite barre (28) d'accouplement est raccordée audit bras (27) de direction au niveau dudit second trou (52) de montage.

4. Tracteur comprenant:
- un châssis (11);
- un essieu avant (15), orienté transversalement et monté à pivotement audit châssis (11), ledit essieu (15) étant limité à un pivotement angulaire maximum prédéterminé par rapport audit châssis (11);
- une paire de roues avant espacées latéralement (17) et reliées à pivotement aux extrémités latérales opposées dudit essieu avant (15) par des pivots de direction (18) définissant un axe de pivotement desdites roues avant (17) par rapport audit essieu avant (15);
- un bras de direction associé à chaque dite roue avant (17) et se prolongeant (27) extérieurement par rapport à celle-ci;
- des moyens de liaison (28) reliant ledit châssis (11) et lesdits bras de direction (27); et
- un mécanisme de direction (19, -) associé fonctionnellement auxdites roues (17) pour effectuer un pivotement sélectif desdites roues avant (17) par rapport audit essieu (15); et caractérisé en ce que:
- lesdites roues avant (17) sont positionnables sur ledit essieu (15) avant suivant plusieurs espacements latéraux différents;
- chaque dit bras de direction (27) est pourvu à ce niveau d'au moins deux trous de montage (51, 52); et
- lesdits moyens de liaison comprennent une barre d'accouplement (28) reliée sélectivement à un bras correspondant de direction (27) au niveau d'un trou sélectionné desdits trous de montage (51, 52), lesdits moyens de liaison (28) effectuant un mouvement de pivotement dudit essieu (15) par rapport audit châssis (11) en réponse à un mouvement de pivotement desdites roues (17) par rapport audit essieu (15).

5. Tracteur selon la revendication 4, caractérisé en ce que lesdits moyens de liaison (28) effectuent un mouvement de pivotement généralement simultané dudit essieu (15) avant par rapport audit châssis (11) en réponse à un mouvement de pivotement dudit mécanisme (19, -) de direction.

6. Tracteur selon la revendication 4 ou 5, caractérisé en ce que lesdits trous (51, 52) de montage sont espacés de différentes distances dudit pivot (18) correspondant de direction.

7. Tracteur selon l'une quelconque des revendications 4 à 6, caractérisé en ce que le montage de ladite barre (28) d'accouplement à chaque trou (51, 52) respectif de montage fournit un rapport différent de la valeur de la rotation angulaire dudit essieu (15) avant pour chaque incrément de rotation angulaire desdites roues (17) par rapport à celui de chaque dit autre trou (51, 52) de montage.

8. Tracteur selon l'une quelconque des revendications 4 à 7, caractérisé en ce que le raccordement de ladite barre (28) d'accouplement audit bras (27) correspondant de direction au niveau de chaque trou (51, 52) respectif de montage assure l'atteinte de la rotation angulaire maximale admissible de pivotement dudit essieu (15) substantiellement en simultanéité avec l'atteinte de la rotation maximale admissible de pivotement desdites roues (17) par rapport audit essieu (15) avant pour un espacement latéral donné desdites roues (17).

9. Tracteur selon l'une quelconque des revendications 4 à 8, caractérisé en ce que ledit mécanisme de direction comprend un cylindre hydraulique (19) reliant ledit essieu (15) avant et au moins l'une desdites roues (17).

10. Tracteur selon l'une quelconque des revendications 4 à 9, caractérisé en ce que chaque dit bras (27) de direction est pourvu de deux trous (51, 52) de montage, un desdits trous (52) de montage correspondant à un réglage de voie étroite desdites roues avant et l'autre desdits trous (51) de montage correspondant à un réglage de voie large desdites roues (17) avant.

11. Tracteur selon l'une quelconque des revendications 4 à 10, caractérisé en ce que lesdits moyens de liaison (28) comprennent une paire de barres (28) d'accouplement reliées audit châssis (11) et se prolongeant à l'extérieur de celui-ci vers lesdits bras (27) de direction pour se raccorder à ceux-ci.

12. Tracteur selon l'une quelconque des revendications 4 à 11, caractérisé en ce que lesdits bras (27) de direction s'étendent vers l'arrière à partir de ladite roue (17) correspondante, lesdits trous (51, 52) de montage étant espacés le long de leur longueur de telle sorte que les distances entre ledit pivot (18) correspondant de direction et lesdits trous (51, 52) correspondants de montage sont différents.

13. Tracteur selon l'une quelconque des revendications 4 à 12, caractérisé en ce que lesdits moyens de liaison comprennent des barres (28) d'accouplement à réglage rapide permettant un ajustement rapide de leur longueur fonctionnelle lorsque la distance entre les extrémités intérieures et extérieures des barres (28) d'accouplement varie en fonction du trou (51, 52) de montage sélectionné.
